# EUROPÄISCHE PATENTSCHRIFT

(11) **EP 2 680 097 B1**
(45) Veröffentlichungstag und Bekanntmachung des Hinweises auf die Patenterteilung: **31.01.2018**
(21) Anmeldenummer: 13401056.0
(22) Anmeldetag: 04.06.2013
(51) Int. Cl.: G05D 1/00

(54) **Selbstfahrendes Reinigungsgerät und Verfahren zur Bedienung eines selbstfahrenden Reinigungsgeräts**
Self-propelled cleaning device and method for operating the same
Robot de nettoyage et procédé de commande associé

(30) Priorität: 27.06.2012 DE 102012105608
(43) Veröffentlichungstag der Anmeldung: 01.01.2014
(73) Patentinhaber: Miele & Cie. KG, 33332 Gütersloh (DE)
(72) Erfinder: Bertram, Andre, 33739 Bielefeld (DE); Buhl, David, 33613 Bielefeld (DE); Döring, Sebastian, 33615 Bielefeld (DE); Ennen, Günther, 32130 Enger (DE); Kara, Seyfettin, 32139 Spenge (DE); Roth, Martin, 33604 Bielefeld (DE); Wolf, Cornelius, 33739 Bielefeld (DE)

(56) Entgegenhaltungen:
- DE-A1-102011 050 357
- US-A1- 2001 020 837
- US-A1- 2002 181 773
- US-A1- 2010 066 676
- US-A1- 2011 288 684
- TAKUYA SHIRAISHI ET AL: "Operation improvement of indoor robot by gesture recognition", MODELING, SIMULATION AND APPLIED OPTIMIZATION (ICMSAO), 2011 4TH INTERNATIONAL CONFERENCE ON, IEEE, 19. April 2011 (2011-04-19), Seiten 1-4, XP031876780, DOI: 10.1109/ICMSAO.2011.5775539 ISBN: 978-1-4577-0003-3

## Beschreibung

Die Erfindung betrifft ein selbstfahrendes Reinigungsgerät, insbesondere einen Saugroboter, zur automatisierten Reinigung von Flächen mit mindestens einem optischen Sensor zur Erfassung einer Umgebung des Reinigungsgeräts. Die Erfindung betrifft weiterhin ein Verfahren zur Bedienung eines selbstfahrenden Reinigungsgeräts.

Derartige selbstfahrende Reinigungsgeräte dienen der automatisierten Reinigung von Flächen, ohne dass sie von einem Benutzer geschoben oder geführt werden müssen. Es ist bekannt, solche Reinigungsgeräte als Staubsauger auszubilden, die dann üblicherweise als Saugroboter bezeichnet werden. Weiter sind selbstfahrende Reinigungsgeräte z.B. zum Wischen von glatten Bodenbelägen bekannt.

Üblicherweise weist ein derartiges Reinigungsgerät einen oder mehrere Sensoren auf, um die Bewegung des Reinigungsgeräts über die zu reinigende Fläche zu kontrollieren, beispielsweise um einen Zusammenstoß mit Hindernissen zu vermeiden. Solche Sensoren können beispielsweise Tast- oder Ultraschallsensoren oder auch optische Sensoren sein. Nur in einem Nahbereich arbeitende Sensoren dienen meist der Vermeidung von Zusammenstößen mit Hindernissen, wohingegen Sensoren mit einer größeren Erfassungsreichweite auch zur Planung einer koordinierten Bewegung des Geräts über die Fläche eingesetzt werden, um beispielsweise sicherzustellen, dass die gesamte Fläche gereinigt wird.

Die Druckschrift DE 10 2004 060 853 A1 beschreibt beispielsweise einen Saugroboter, der zwei bildaufnehmende Kameras als optische Sensoren zur Steuerung der automatischen Bewegung über die zu reinigende Fläche aufweist. Eine Bedienung des Saugroboters erfolgt über am Gerät vorgesehene Tasten oder über eine Funk mit dem Saugroboter in Verbindung stehenden Fernbedienung. Aufgrund der eigenständigen Bewegung des Saugroboters im Raum ist eine Bedienung über am Gerät angeordnete Tasten im Betrieb unter Umständen schwierig. Bei einer Fernbedienung besteht das Problem, dass diese schnell verlegt werden kann oder im entscheidenden Moment nicht zur Hand ist. Zudem ist eine Eingabe von komplexen Eingaben, beispielsweise zur Definition von zu reinigenden Flächen, über eine Tasteneingabe mühsam.

Aus der US 2011/0288684 A1 ist ein Roboter bekannt, der mehrere um das Gerät verteilte Sensoren aufweist, die in der Lage sind Gesten einer Person zu erfassen und auf diese im Rahmen von Fahrbefehlen zu reagieren. Nachteil an dieser Lösung ist, dass der Benutzer von einem der Sensoren erfasst werden muss, d.h. dass sich der Benutzer zu dem Roboter in Position bringen muss.

Die DE 10 2011 050 357 A1 offenbart außerdem ein selbstständig verfahrbares Gerät zur Bodenreinigung, welches mittels einer Kamera Bewegungsmuster eines Benutzers erfasst, durch Auswertesoftware analysiert und in Form von Befehlen an das Gerät weiterleitet. Auch in der hier beschriebenen Lösung liegen die oben genannten Nachteile vor.

Die US 2010 / 066676 A1 offenbart ein Verfahren zum Betrieb eines Systems bei den Bewegungen eines Körpers über Detektoren erkannt, ausgewertet und zur Steuerung des Systems eingesetzt werden. Die US 2002 / 181773 A1 offenbart ein System, welches sowohl die Bewegungen eines Körpers über Detektoren als auch die Geräusche eines Körpers über gesonderte Detektoren erkennt, auswertet und zur Steuerung des Systems einsetzt. Die US 2001 / 020837 A1 offenbart einen Roboter mit einem Mikrofon zur Stimmerkennung eines Benutzers und mit einem CCD-Element zur Gestenerkennung eines Benutzers. Der Roboter wird in Abhängigkeit von der erkannten Stimme und den Gesten des Benutzers gesteuert.

Der Erfindung stellt sich somit das Problem, ein selbstfahrendes Reinigungsgerät zu schaffen, das auf einfache und intuitive Weise jederzeit bequem bedient werden kann. Es ist eine weitere Aufgabe der vorliegenden Erfindung, ein Verfahren zur Bedienung eines derartigen Reinigungsgeräts anzugeben.

Erfindungsgemäß wird dieses Problem durch ein selbstfahrendes Reinigungsgerät mit den Merkmalen des Patentanspruchs 1 und ein Verfahren zur Bedienung eines selbstfahrenden Reinigungsgeräts mit den Merkmalen des Patentanspruchs 6 gelöst.

Erfindungsgemäß ist ein selbstfahrendes Reinigungsgerät der eingangsgenannten Art dazu eingerichtet, Signale von dem optischen Sensor auszuwerten, Gesten eines Benutzers zu erkennen und das Reinigungsgerät anhand von erkannten Gesten zu steuern, wobei der optische Sensor auf einer Oberseite des Reinigungsgeräts angeordnet und als eine bildgebende Kamera mit einem weiten Gesichtsfeld ausgebildet ist. Für eine Kamera mit einem weiten Gesichtsfeld kommt insbesondere die Verwendung eines sog. Fisheye-Objektivs in Frage, aber auch andere omnidirektionale Kameras sind denkbar.

Besonders der optische Sensor an der Oberseite des Reinigungsgeräts ermöglicht jederzeit eine Steuerung über Gesten. Der Erfassungsbereich ist besonders groß, wenn der Sensor als bildgebende Kamera mit einem weiten Gesichtsfeld ausgebildet ist. Hierdurch kann auf weitere Sensoren zur Erfassung der Gesten verzichtet werden. Außerdem muss der Benutzer nicht eine bestimmte Position in Bezug auf den Sensor einnehmen, um in dessen Erfassungsbereich zu sein. Das Reinigungsgerät kann so von allen Seiten Befehle annehmen unabhängig von der Position des Benutzers in Bezug auf das Reinigungsgerät.

Als besonders vorteilhaft hat sich eine bildgebende Kamera als optischen Sensor erwiesen, mit einem weiten Gesichtsfeld von über 160 Grad, vorzugsweise über 180 Grad. Diese weiten Gesichtsfelder sind vor allem durch extreme Weitwinkelobjektive, wie beispielsweise Fisheye-Objektive, an der Kamera erreichbar. Mit einem Gesichtsfeld, also einem Öffnungswinkel von 185° ergibt sich beispielsweise relativ zum Horizont ein vertikaler Öffnungswinkel von -2,5 Grad bis 90 Grad. Durch die großen Sichtbereiche dieser Systeme kann die Zahl der notwendigen optischen Sensoren stark, vorzugsweise auf einen Sensor, reduziert werden.

Vorteilhafterweise ist der optische Sensor fest auf der Oberseite des Reinigungsgerätes angeordnet. Dies erleichtert sowohl die Gesten- als auch die Positions- und Hinderniserkennung, da Bewegungen des Sensors selbst nicht aufwändig aus den erfassten Informationen herausgerechnet werden müssen. Die Bewegung des Sensors setzt hier vielmehr auch immer eine Bewegung des Reinigungsgeräts voraus. Außerdem ist eine feste Anordnung des optischen Sensors, also eine feste Lagerung in Bezug auf ein Gehäuse des Reinigungsgerätes besonders einfach realisierbar.

In entsprechender Weise weist ein erfindungsgemäßes Verfahren zur Bedienung eines selbstfahrenden Reinigungsgerät, insbesondere eines Saugroboters, wobei mindestens eine Kamera als optischer Sensor zur Aufnahme von Bildern einer Umgebung des Reinigungsgeräts vorgesehen ist, und wobei der Schritt des Auswertens eine Extraktion von Merkmalen wie Kanten oder Mustern aus den Bildern umfasst, die folgenden Schritten auf: Es werden Signale mindestens eines am Reinigungsgerät angeordneten optischen Sensors zur Erkennung von Gesten eines Benutzers ausgewertet und erkannte Gesten in Anweisungen zur Steuerung des Reinigungsgeräts umgesetzt. Das Reinigungsgerät wird dann gemäß den Anweisungen gesteuert.

Eine Steuerung über Gesten ist intuitiv und kann jederzeit ohne notwendige zusätzliche Geräte wie Fernbedienungen eingesetzt werden. Die Akzeptanz von selbstreinigenden Reinigungsgeräten kann aufgrund der intuitiven einfachen Steuerung auch bei technisch weniger affinen Anwendern gesteigert werden. Die Gestensteuerung ermöglicht zudem eine nahezu barrierefreie Bedienung, die im Gegensatz zu einer Bedienung direkt an einem unter Umständen bewegten Reinigungsgerät auch von körperlich eingeschränkten Benutzern möglich ist.

In einer vorteilhaften Ausgestaltung des Reinigungsgeräts ist vorgesehen, die Signale des mindestens einen optischen Sensors zusätzlich zur Positions- und Hinderniserkennung auszuwerten. Auf diese Weise kann ein optischer Sensor, beispielsweise eine oder mehrere Kameras, sowohl zur Kontrolle der automatischen Bewegung über die zu reinigende Fläche als auch zur Bedienung des Reinigungsgeräts eingesetzt werden. Diese Mehrfachnutzung des optischen Sensors führt vorteilhaft zu einer Material- und damit Kostenersparnis.

In einer weiteren vorteilhaften Ausgestaltung des Reinigungsgeräts sowie des Verfahrens zur Bedienung ist ein akustischer Sensor vorgesehen, dessen Signale ausgewertet werden, wobei akustische Befehle eines Benutzers erkannt werden. Die akustischen Befehle können ergänzend zu der Gestensteuerung zur Bedienung des Reinigungsgeräts herangezogen werden. In einer bevorzugten Ausgestaltung kann vorgesehen sein, über die akustischen Befehle die Gestensteuerung des Reinigungsgeräts zu kontrollieren und insbesondere zu aktivieren und/oder zu deaktivieren. Auch in der zwischenmenschlichen Kommunikation werden akustische und optische Kommunikationskanäle ergänzend benutzt. Ein entsprechend auf akustische und optische Signale reagierendes Bedienverfahren für das Reinigungsgerät ist damit besonders intuitiv.

Weitere vorteilhafte Ausgestaltungen und Weiterbildungen der Erfindung ergeben sich aus den Unteransprüchen.

Ausführungsbeispiele der Erfindung sind in den nachfolgenden Zeichnungen rein schematisch dargestellt und werden im Folgenden näher beschrieben. Es zeigt:
Fig. 1 ein erstes Ausführungsbeispiel eines selbstfahrenden Reinigungsgeräts und
Fig. 2 ein zweites Ausführungsbeispiel eines selbstfahrenden Reinigungsgeräts.

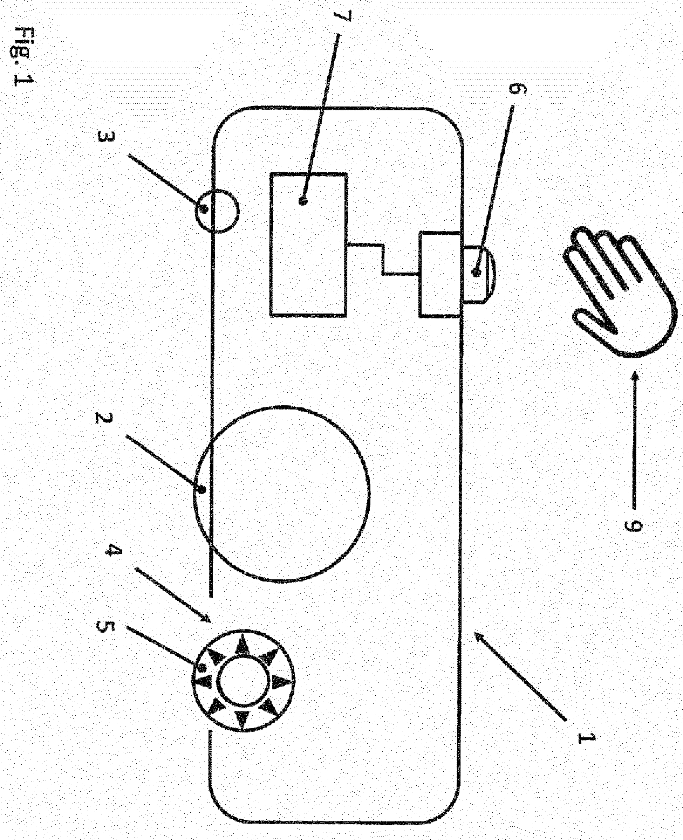

Fig. 1 zeigt als Beispiel eines selbstfahrenden Reinigungsgeräts einen Saugroboter 1 in einer schematischen Darstellung. Der Saugroboter 1 weist ein Antriebssystem auf, von dem in der Figur Antriebsräder 2 sowie ein Stützrad 3 dargestellt werden. Es sind beispielsweise zwei Antriebsräder 2, eins auf jeder Seite des Saugroboters 1 vorgesehen, die unabhängig voneinander über hier nicht wiedergegebene Antriebsmotoren angetrieben werden. Das Stützrad 3 ist entweder verschwenkbar oder als eine in alle Richtungen drehbare Kugel ausgebildet. Bei voneinander unabhängiger Ansteuerung der Drehrichtungen und Drehgeschwindigkeiten der Antriebsräder 2 kann der Saugroboter 1 beliebige Bewegungen auf einer zu reinigenden Fläche ausführen.

Weiterhin ist ein Saugbereich 4 in der Fig. 1 angedeutet, in dem nicht dargestellte Saugdüsen angeordnet sind, die beispielsweise in bekannter Weise mit einem Filtersystem, z.B. einem Staubsaugerbeutel, mit einem Gebläsemotor zusammen wirken. Unterstützend ist in dem dargestellten Ausführungsbeispiel im Saugbereich 4 eine rotierende Bürste 5 angeordnet. Der Saugbereich 4 und die rotierende Bürste 5 repräsentieren die Reinigungseinrichtungen des Saugroboters 1. Weitere für den Betrieb des Saugroboters 1 vorhandene Elemente, beispielsweise eine wiederaufladbare Batterie zur Stromversorgung, Ladeanschlüsse für die Batterie oder eine Entnahmemöglichkeit für ein Staubsammelorgan, beispielsweise ein Staubsaugerbeutel sind in der Fig. 1 aus Gründen der Übersichtlichkeit nicht wiedergegeben.

Der Saugroboter 1 weist eine Steuervorrichtung 7 auf, die mit dem Antriebssystem sowie den Reinigungseinrichtungen zu deren Steuerung verbunden ist. Weiter ist ein optischer Sensor 6 auf einer Oberseite des Saugroboters 1 angeordnet, der im dargestellten Ausführungsbeispiel als eine bildgebende Kamera mit einem weiten Gesichtsfeld ausgebildet ist. Ein derartiges breites Gesichtsfeld kann z. B. durch die Verwendung eines sog. Fisheye-Objektivs erzielt werden. Zur einfacheren Darstellung wird der optische Sensor 6 im Folgenden als Kamera 6 bezeichnet.

Im Betrieb des Saugroboters 1 erfasst die Kamera 6 fortlaufend das Umfeld des Saugroboters 1 und sendet eine Folge aufgenommener Bilder als Signale an die Steuereinheit 7. Diese ist dazu eingerichtet, die Bildfolge der Kamera 6 auszuwerten und aus den Bildern Gesten eines Benutzers 9, der in der Fig. 1 als eine Hand symbolisiert ist, zu erkennen.

Erkannte Gesten werden dann von der Steuereinheit 7 in Anweisung zur Steuerung des Saugroboters 1 umgesetzt. Die Umsetzung in Steueranweisungen für den Saugroboter 1 kann dabei anhand von vorgegebenen hinterlegten Tabellen in der Steuereinrichtung 7 erfolgen. Beispielsweise kann ein Zeigen des Benutzers 9 auf eine bestimmte Stelle im Raum als eine Anweisung umgesetzt werden, dass der Roboter diese Stelle im Raum anfährt. Als eine weitere Geste kann beispielsweise ein Hochhalten der geöffneten Hand als eine Anweisung umgesetzt werden, den Reinigungsvorgang zu beschleunigen oder zu verlangsamen, um die Reinigungsqualität zu beeinflussen. Als eine Geste ist dabei nicht nur eine statische Handstellung zu verstehen, sondern auch ein Bewegungsmuster, das von Benutzer 9 ausgeführt wird. So kann z.B. ein Zeigen auf einen bestimmten Bereich durch Abfahren der Grenzen des Bereichs als eine Anweisung umgesetzt werden, vom Saugroboter 1 diesen Bereich zu definieren, um ihn entweder zu reinigen oder von der Reinigung auszunehmen.

Zur Erkennung der Gesten anhand der Bilder der Kamera 6 kann die Steuereinrichtung 7 eine Extraktion von ausgezeichneten Merkmalen der übermittelten Bilder, beispielsweise von Kanten oder Mustern, umfassen. Insbesondere in Verbindung mit einer Bewegungsanalyse, d. h. dem Nachverfolgen extrahierter Merkmale in aufeinanderfolgende Bildsequenzen, kann so eine Gestenerkennung auf einfache Weise mit nur einer bildgebenden Kamera durchgeführt werden. Unterstützend kann der Saugroboter 1 eine Projektionseinrichtung aufweisen, die ein Lichtmuster in die Umgebung des Saugroboters 1 projiziert. Ein solches Lichtmuster kann beispielsweise ein Punkt- Strich - oder Gittermuster sein, das z.B. durch einen Laser erzeugt wird. Es kann Infrarot- oder sichtbares Licht eingesetzt werden. Eine Analyse der Abbildung des Gittermusters auf die Umgebung ermöglicht dann eine Extraktion von dreidimensionalen Informationen aus den zweidimensionalen Bildern, die die Kamera 6 bereitstellt.

In alternativen Ausgestaltungen des Saugroboters 1 kann vorgesehen sein, als optischen Sensor 6 mindestens voneinander beabstandete Kameras einzusetzen. Mithilfe von zwei Kameras können stereoskopische Verfahren zur Extraktion dreidimensionaler Informationen eingesetzt werden. Dreidimensionale Informationen erweitern den Erkennungsbereich von Gesten, da beispielsweise ein auf eine Kamera hin gerichteter Fingerzeig in einer zweidimensionalen Darstellung nur schwer identifiziert werden kann. In einer weiteren alternativen Ausgestaltung können zur Ermittlung von dreidimensionalen Informationen Licht-Laufzeitmessungen eingesetzt werden. Derartige Verfahren sind als TOF (Time-Of-Flight)-Verfahren bekannt.

Die Kamera 6 kann exklusiv nur im Rahmen der Gestenerkennung eingesetzt werden. Es ist jedoch auch möglich und im Sinne einer Material- und Kosteneinsparung vorteilhaft, die von der Kamera 6 bereitgestellten Bilder auch zu weiteren Zwecken einzusetzen, insbesondere zur Hindernis- und Positionserkennung.

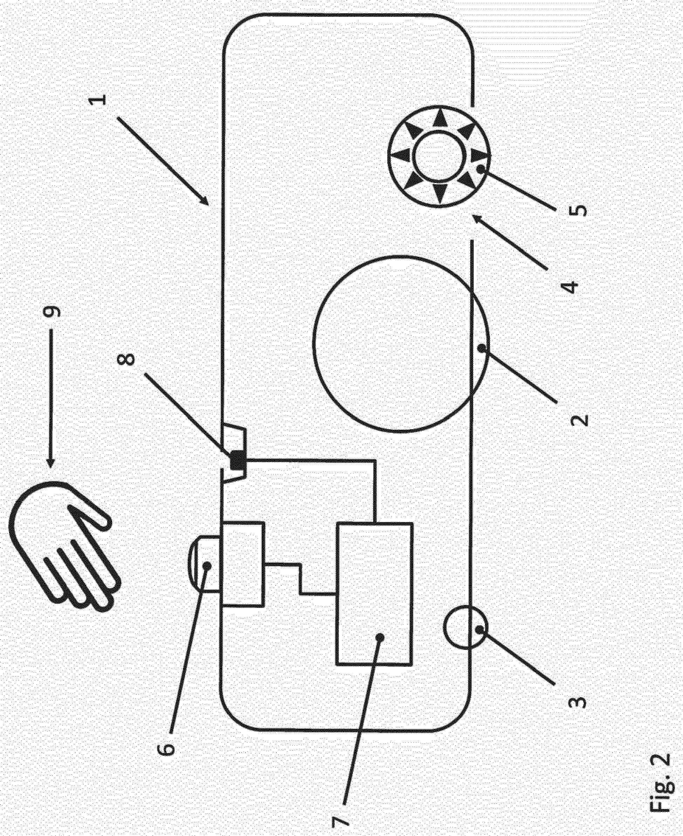

Fig. 2 zeigt ein weiteres Ausführungsbeispiel eines Saugroboters 1 als selbstfahrendes Reinigungsgerät. Gleiche Bezugszeichen kennzeichnen in dieser Figur gleiche oder gleichwirkende Elemente wie beim Ausführungsbeispiel der Fig. 1.

Gegenüber dem Ausführungsbeispiel 1 ist der in Fig. 2 dargestellte Saugroboter 1 um ein Mikrofon als akustischen Sensor 8 ergänzt. Der einfacheren Darstellung halber wird der akustische Sensor 8 im Folgenden auch als Mikrofon 8 bezeichnet. Bezüglich der Antriebseinheit und der Reinigungseinrichtungen wird auf die Beschreibungen zum ersten Ausführungsbeispiel verwiesen.

Beim Saugroboter der Fig. 2 werden von dem Mikrofon 8 aufgenommene Signale der Steuervorrichtung 7 zugeführt und dort ausgewertet. Die Auswertung umfasst beispielsweise eine Unterdrückung von Hintergrundgeräuschen und eine Erkennung von akustischen Befehlen des Benutzers 9. Derartige Befehle können markante Geräusche wie beispielsweise Händeklatschen oder eine Folge von Händeklatschen sein, aber auch gesprochene Befehle (Spracherkennung).

Es kann zum einen vorgesehen sein, erkannte akustische Befehle zur übergeordneten Kontrolle der Gestensteuerung des Reinigungsgerätes einzusetzen. Es kann beispielsweise vorgesehen sein, die Gestensteuerung durch akustische Befehle, z.B. Händeklatschen, zu aktivieren und/oder zu deaktivieren. Auf diese Weise kann verhindert werden, dass der Saugroboter 1 nicht für ihn bestimmte Handbewegungen des Benutzers 9 als Gesten auffasst.

Zum anderen kann die Steuerung über akustische Befehle ergänzend zur Gestensteuerung eingesetzt werden. Beispielsweise kann das Anzeigen eines Bereichs der zu reinigenden Fläche über eine Geste erfolgen, während die Art der dort auszuführenden Tätigkeit des Saugroboters 1 akustisch über Sprache gesteuert wird. Bei gleicher Geste kann dann ein gesprochener Zusatz wie "hier reinigen" oder "hier gründlicher reinigen" oder "diesen Bereich auslassen" dazu dienen, verschiedene Betriebsweisen des Saugroboters 1 festzulegen. Besonders vorteilhaft ist eine Sprachsteuerung wenn normal gesprochene Sätze anstelle von fest vorgegebenen Befehlen von der Steuervorrichtung 7 erkannt und interpretiert werden können.

Die Kombination aus akustischer Steuerung und Gestensteuerung kann zudem eingesetzt werden, um die Gestensteuerung lernfähig auszugestalten. In einer derartigen Weiterbildung des Saugroboters 1 ist die Umsetzung erkannter Gesten in Anweisung zur Steuerung des Saugroboters 1 nicht zwingend fest vorgegeben, sondern kann anhand von ergänzenden Sprachbefehlen individuell definiert werden.

### Bezugszeichenliste

- 1: Saugroboter
- 2: Antriebsrad
- 3: Stützrad
- 4: Saugbereich
- 5: Bürste
- 6: Optischer Sensor (Kamera)
- 7: Steuervorrichtung
- 8: Akustischer Sensor (Mikrofon)
- 9: Benutzer

## Patentansprüche

1. Selbstfahrendes Reinigungsgerät zur automatisierten Reinigung von Flächen, aufweisend mindestens einen optischen Sensor (6) zur Erfassung einer Umgebung des Reinigungsgeräts, wobei das Reinigungsgerät eine Steuervorrichtung (7) aufweist, die dazu eingerichtet ist, Signale von dem mindestens einen optischen Sensor (6) auszuwerten, Gesten eines Benutzers (9) zu erkennen und das Reinigungsgerät anhand von erkannten Gesten zu steuern, wobei der mindestens eine optische Sensor (6) auf einer Oberseite des Reinigungsgeräts angeordnet ist,
**dadurch gekennzeichnet,**
**dass** der optische Sensor (6) mindestens zwei voneinander beabstandete Kameras aufweist, wobei die Kameras zur Extraktion dreidimensionaler Informationen eingesetzt werden.

2. Reinigungsgerät nach Anspruch 1, bei dem die bildgebende Kamera einem Gesichtsfeld von über 160 Grad, vorzugsweise über 180 Grad aufweist.

3. Reinigungsgerät nach Anspruch 2, bei dem das Reinigungsgerät eine Lichtquelle zur Abgabe von Lichtpulsen in die Umgebung des Reinigungsgeräts aufweist, und bei dem die Steuervorrichtung (7) zur Durchführung einer Laufzeitmessung für von der Lichtquelle abgegebenes, reflektiertes und von dem mindestens einen optischen Sensor (6) empfangenes Licht eingerichtet ist.

4. Reinigungsgerät nach einem der Ansprüche 1 bis 3, weiter aufweisend einen mit der Steuervorrichtung (7) verbundenen akustischen Sensor (8), wobei die Steuervorrichtung (7) dazu eingerichtet ist, Signale von dem akustischen Sensor (8) auszuwerten, akustische Befehle eines Benutzers zu erkennen und das Reinigungsgerät zusätzlich und/oder ergänzend zu den erkannten Gesten anhand erkannter akustischer Befehle zu steuern.

5. Reinigungsgerät nach einem der Ansprüche 1 bis 4, ausgebildet als Saugroboter (1).

6. Verfahren zur Bedienung eines selbstfahrenden Reinigungsgeräts, insbesondere eines Saugroboters (1), wobei mindestens zwei Kameras als optische Sensoren (6) zur Aufnahme von Bildern einer Umgebung des Reinigungsgeräts vorgesehen sind, mit den folgenden Schritten:
- Auswerten von Signalen mindestens eines am Reinigungsgerät angeordneten optischen Sensors (6) zur Erkennung von Gesten eines Benutzers (9), wobei der Schritt des Auswertens eine Extraktion von Merkmalen wie Kanten oder Mustern aus den Bildern umfasst, wobei der Schritt des Auswertens ein stereoskopisches Verfahren umfasst;
- Umsetzen erkannter Gesten in Anweisungen zur Steuerung des Reinigungsgeräts und
- Steuern des Reinigungsgeräts gemäß den Anweisungen.

7. Verfahren nach Anspruch 6, wobei zu extrahierende Merkmalen mittels einer Projektionseinrichtung in die Umgebung des Reinigungsgeräts projiziert werden.

8. Verfahren nach einem der Ansprüche 6 bis 7, wobei ein akustischer Sensor (8) vorgesehen ist und wobei Signale von dem akustischen Sensor (8) ausgewertet und akustische Befehle eines Benutzers erkannt werden.

9. Verfahren nach Anspruch 8, bei dem das Reinigungsgerät zusätzlich und/oder ergänzend zu den erkannten Gesten anhand erkannter akustischer Befehle gesteuert wird.

10. Verfahren nach Anspruch 8 oder 9, bei dem die Steuerung des Reinigungsgerätes über Gesten durch erkannte akustische Befehle kontrolliert wird und insbesondere aktiviert und/oder deaktiviert wird.

## Claims

1. Self-propelled cleaning device for automated cleaning of surfaces, comprising at least one optical sensor (6) for measuring surroundings of the cleaning device, the cleaning device comprising a controller (7) which is designed to analyse signals from the at least one optical sensor (6), to detect a user's (9) gestures and to control the cleaning device according to detected gestures, the at least one optical sensor (6) being arranged on an upper side of the cleaning device,
**characterised in that**
the optical sensor (6) comprises at least two mutually spaced cameras, the cameras being used for extracting three-dimensional information.

2. Cleaning device according to claim 1, wherein the imaging camera has a field of view of more than 160 degrees, preferably more than 180 degrees.

3. Cleaning device according to claim 2, wherein the cleaning device comprises a light source for emitting light pulses into the surroundings of the cleaning device, and wherein the controller (7) is designed to carry out a measurement of the transit time for light that is emitted by the light source, reflected, and received by the at least one optical sensor (6).

4. Cleaning device according to any of claims 1 to 3, further comprising an acoustic sensor (8) that is connected to the controller (7), wherein the controller (7) is designed to analyse signals from the acoustic sensor (8), to detect a user's acoustic commands and to control the cleaning device according to detected acoustic commands in addition and/or as a supplement to the detected gestures.

5. Cleaning device according to any of claims 1 to 4, designed as a robotic vacuum cleaner (1).

6. Method for operating a self-propelled cleaning device, in particular a robotic vacuum cleaner (1), wherein at least two cameras are provided as optical sensors (6) for capturing images of the surroundings of the cleaning device, comprising the following steps:
- analysing signals from at least one optical sensor (6) arranged on the cleaning device in order to detect a user's (9) gestures, wherein the step of analysing involves extracting features such as edges or patterns from the images, wherein the step of analysing involves a stereoscopic method;
- converting detected gestures into instructions for controlling the cleaning device; and
- controlling the cleaning device according to the instructions.

7. Method according to claim 6, wherein features to be extracted are projected into the surroundings of the cleaning device by means of a projection device.

8. Method according to either claim 6 or claim 7, wherein an acoustic sensor (8) is provided and wherein signals from the acoustic sensor (8) are analysed and a user's acoustic commands are detected.

9. Method according to claim 8, in which the cleaning device is controlled according to detected acoustic commands in addition and/or as a supplement to the detected gestures.

10. Method according to either claim 8 or claim 9, wherein control of the cleaning device by gestures is controlled, and in particular activated and/or deactivated, by detected acoustic commands.

## Revendications

1. Appareil de nettoyage automoteur destiné au nettoyage automatisé de surfaces, présentant au moins un capteur (6) optique destiné à la saisie d'un environnement de l'appareil de nettoyage, dans lequel l'appareil de nettoyage présente un dispositif de commande (7) qui est conçu pour analyser des signaux en provenance du capteur (6) optique au moins au nombre de un, détecter des gestes d'un utilisateur (9) et commander l'appareil de nettoyage à l'aide de gestes détectés, dans lequel le capteur (6) optique au moins au nombre de un est disposé sur un côté supérieur de l'appareil de nettoyage,
**caractérisé en ce que**
le capteur (6) optique présente au moins deux caméras espacées l'une de l'autre, les caméras étant mises en oeuvre pour l'extraction d'informations en trois dimensions.

2. Appareil de nettoyage selon la revendication 1, dans lequel la caméra d'imagerie présente un champ visuel supérieur à 160 degrés, de préférence supérieur à 180 degrés.

3. Appareil de nettoyage selon la revendication 2, dans lequel l'appareil de nettoyage présente une source lumineuse destinée à l'émission d'impulsions lumineuses dans l'environnement de l'appareil de nettoyage, et dans lequel le dispositif de commande (7) est conçu pour la réalisation d'une mesure de temps de parcours pour la lumière émise par la source lumineuse, réfléchie, et reçue par le capteur (6) optique au moins au nombre de un.

4. Appareil de nettoyage selon l'une des revendications 1 à 3, présentant également un capteur (8) acoustique raccordé au dispositif de commande (7), dans lequel le dispositif de commande (7) est conçu pour analyser des signaux du capteur (8) acoustique, détecter des instructions acoustiques d'un utilisateur et commander l'appareil de nettoyage à l'aide d'instructions acoustiques détectées à titre supplémentaire et/ou complémentaire par rapport aux gestes détectés.

5. Appareil de nettoyage selon l'une des revendications 1 à 4, constitué en tant qu'aspirateur robot (1).

6. Procédé de fonctionnement d'un appareil de nettoyage automoteur, en particulier d'un aspirateur robot (1), dans lequel il est prévu au moins deux caméras en tant que capteurs (6) optiques destinées à la prise d'images d'un environnement de l'appareil de nettoyage, avec les étapes suivantes :
- analyse de signaux d'au moins un capteur (6) optique disposé sur l'appareil de nettoyage en vue de la détection de gestes d'un utilisateur (9), dans lequel l'étape de l'analyse comprend une extraction de caractéristiques telles qu'arêtes ou dessins à partir des images, dans lequel l'étape de l'analyse comprend un procédé stéréoscopique ;
- conversion de gestes détectés en consignes destinées à la commande de l'appareil de nettoyage
et
- commande de l'appareil de nettoyage selon les consignes.

7. Procédé selon la revendication 6, dans lequel des caractéristiques à extraire sont projetées dans l'environnement de l'appareil de nettoyage au moyen d'un système de projection.

8. Procédé selon l'une des revendications 6 à 7, dans lequel il est prévu un capteur (8) acoustique et dans lequel des signaux du capteur (8) acoustique sont analysés et des instructions acoustiques d'un utilisateur sont détectées.

9. Procédé selon la revendication 8, dans lequel l'appareil de nettoyage est commandé à l'aide d'instructions acoustiques à titre supplémentaire et/ou complémentaire par rapport aux gestes détectés.

10. Procédé selon la revendication 8 ou 9, dans lequel la commande de l'appareil de nettoyage par le biais de gestes est contrôlée, et en particulier est activée et/ou désactivée, par des instructions acoustiques détectées.
